# EUROPEAN PATENT APPLICATION

(11) **EP 1 156 621 A2**
(43) Date of publication of application: **21.11.2001**
(21) Application number: 01111815.5
(22) Date of filing: 16.05.2001
(51) Int. Cl.: H04L 12/24

(54) **Network management with integrative fault location**

(30) Priority: 17.05.2000 US 204945 P; 07.11.2000 US 707761
(71) Applicant: Ectel Ltd., Petach Tikva (IL)
(72) Inventor: Yam, Eric S., Potomac, Maryland 20854 (US); Metha, Kashyap, Germantown, Maryland 20876 (US)
(74) Representative: Stellinger, Jens-Holger

(57) **Abstract**

A system (50) for testing a communication network (20) includes a non-intrusive monitor (42), configured to monitor communication activity in the network non-intrusively, thus generating monitoring results, and an intrusive testing tool set (44), configured to inject a test stimulus into the network and to detect the test stimulus after passage of the test stimulus through the network. A fusion processor (54) is coupled to receive and analyze the monitoring results to detect a fault condition, and to initiate an intrusive test of the network by the tool set responsive to the detected fault condition.

## Description

### FIELD OF THE INVENTION

The present invention relates generally to communication networks, and specifically to methods and systems for monitoring network performance and diagnosing faults in communication networks.

### BACKGROUND OF THE INVENTION

Methods and devices for network testing fall generally into two categories: intrusive and non-intrusive. Intrusive methods collect information about network processes by displacing normal network communications traffic with dedicated diagnostic signals. Typically a known stimulus is injected at the input to the process, and the response of the network to the stimulus is monitored at the output of the process. Most commonly, the stimulus is a communication signal or pattern of a given type, such as a simulated telephone, fax or data call, or a data packet transmission session, which is initiated at one end of a link and is received and analyzed at the other end. Intrusive methods of this sort are effective at diagnosing network problems and faulty equipment, but they tend to interfere with normal service and reduce the network capacity available for subscriber traffic.

Because of the shortcomings of intrusive testing methods, considerable efforts have been invested in developing more effective non-intrusive techniques. For example, U.S. Patent 5,490,199, whose disclosure is incorporated herein by reference, describes a method for non-intrusive monitoring and analysis of facsimile transmissions. Real-time customer traffic is monitored to detect circuit impairments and evaluate service being provided. As another example, U.S. Patent 5,661,778, whose disclosure is also incorporated herein by reference, describes non-intrusive performance monitoring of a DS0 channel between a customer premises interface and a D4 channel bank. The monitoring is accomplished by augmentation of existing channel bank equipment and of a digital services communication device that terminates the DS0 link at the customer site.

### SUMMARY OF THE INVENTION

It is an object of the present invention to provide improved methods and systems for monitoring communication network performance.

In preferred embodiments of the present invention, a network monitoring and diagnostic system uses non-intrusive measurements to detect the occurrence of possible network faults. When a fault is detected, the system performs focused intrusive measurements to verify the fault and to ascertain its location. This fusion of intrusive and non-intrusive measurements enables faults to be pinpointed with the superior speed and effectiveness offered by intrusive techniques. The use of intrusive measurements is substantially limited, however, to times and places on the network at which faults have actually occurred, so that interference of the intrusive measurements with normal network traffic is minimized.

There is therefore provided, in accordance with a preferred embodiment of the present invention, a method for testing a communication network, including:
monitoring communication activity in the network non-intrusively to generate monitoring results;
analyzing the results to detect a fault condition; and
initiating an intrusive test of the network responsive to the detected fault condition.

Preferably, monitoring the communication activity includes receiving call detail records of calls placed or data transmission attributes of packets being transmitted through the network. Additionally or alternatively, analyzing the results includes deriving a service quality indicator from the results, and comparing the indicator to a predefined threshold in order to detect the fault condition.

Further preferably, analyzing the results includes identifying a part of the network in which the fault has occurred, and initiating the intrusive test includes carrying out the intrusive test in the identified part of the network. Most preferably, initiating the intrusive test includes passing a test stimulus through the part of the network to verify existence of the fault condition in the part. Additionally or alternatively, initiating the intrusive test includes passing a test stimulus through a segment of the part of the network in order to localize the fault condition.

Preferably, initiating the intrusive test includes initiating the test automatically by a computer, in response to preprogrammed test instructions, upon detection of the fault condition. Further preferably, the method includes reporting the fault condition to a user responsive to the monitoring results and the intrusive test.

There is also provided, in accordance with a preferred embodiment of the present invention, apparatus for testing a communication network, including a fusion processor adapted to receive monitoring results from a non-intrusive monitor of communication activity in the network, to analyze the results to detect a fault condition, and to initiate an intrusive test of the network by an intrusive testing tool responsive to the detected fault condition.

There is additionally provided, in accordance with a preferred embodiment of the present invention, a computer software product for testing a communication network, the product including a computer-readable medium in which program instructions are stored, which instructions, when read by a computer, cause the computer to receive monitoring results from a non-intrusive monitor of communication activity in the network, to analyze the results to detect a fault condition, and to initiate an intrusive test of the network by an intrusive testing tool responsive to the detected fault condition.

There is further provided, in accordance with a preferred embodiment of the present invention, a system for testing a communication network, including:
a non-intrusive monitor, configured to monitor communication activity in the network non-intrusively, thus generating monitoring results;
an intrusive testing tool set, configured to inject a test stimulus into the network and to detect the test stimulus after passage of the test stimulus through the network; and
a fusion processor, coupled to receive and analyze the monitoring results to detect a fault condition, and to initiate an intrusive test of the network by the tool set responsive to the detected fault condition.

Preferably, the system includes a user terminal, wherein the processor is adapted to report the fault condition to the user terminal responsive to the monitoring results and the intrusive test.

Preferably, the communication activity includes signaling activity, voice-band communications, multimedia communications and/or data packet activity.

The present invention will be more fully understood from the following detailed description of the preferred embodiments thereof, taken together with the drawings in which:

### BRIEF DESCRIPTION OF THE DRAWINGS

Fig. 1 is a graph that schematically illustrates a communication network to which intrusive and non-intrusive fault detection elements are coupled, in accordance with a preferred embodiment of the present invention;
Fig. 2 is a block diagram that schematically illustrates a communication network testing system that fuses intrusive and non-intrusive elements, in accordance with a preferred embodiment of the present invention;
Fig. 3 is a block diagram that schematically illustrates functional interactions among the elements of the system of Fig. 2, in accordance with a preferred embodiment of the present invention; and
Fig. 4 is a flow chart that schematically illustrates a method for network testing, in accordance with a preferred embodiment of the present invention.

### DETAILED DESCRIPTION OF PREFERRED EMBODIMENTS

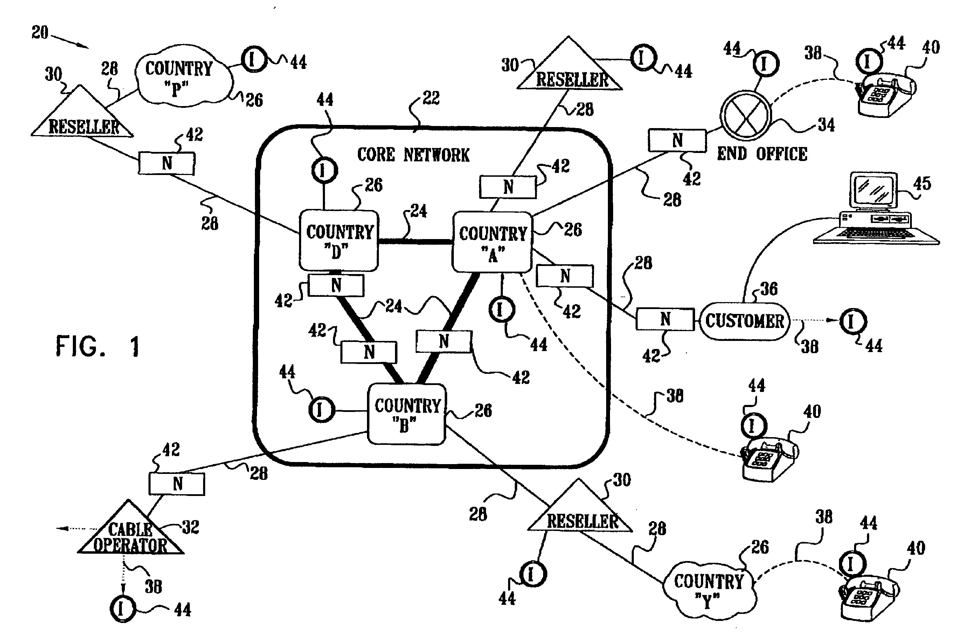

Fig. 1 is a graph that schematically illustrates an exemplary international communication network 20 in which non-intrusive monitors 42 and intrusive testing tools 44 are deployed, in accordance with a preferred embodiment of the present invention. International network 20 is built around a core network 22, which links countries 26, labeled countries A, B and D, via core network trunks 24. Network service resellers 30, serving additional countries P and Y, for example, are linked to the core network by carrier lines 28. Network 20 may also include carrier lines 28 to other service wholesalers, such as a cable operator 32, a network end office 34 and a wholesale customer 36. These network links and participants are shown here only by way of example, and it will be understood that the principles of network testing and diagnostics described hereinbelow are similarly applicable to other network configurations.

Non-intrusive monitors 42 are typically installed on trunks 24 and/or carrier lines 28. An example of such a monitor is the QualiView system produced by ECtel Ltd. of Petah Tikva, Israel. These monitors preferably perform live traffic monitoring at the digital trunk level, giving simultaneous measurements on multiple active channels. They collect call detail records (CDRs) for large numbers of calls passing through the network and identify deviations from normal behavior. Monitors 42 allow a user to set error thresholds, which are typically indicative of a serious drop in the quality of service (QoS) on a monitored link, so that an alarm will be generated when the thresholds are exceeded. The non-intrusive monitors are preferably used to measure characteristics of both voice-band channels and signaling links, as well as data packet traffic, thus providing data that includes:
- Traffic-related information, such as traffic volume, call completion rate, answer-seizure ratio, post-dial delay and voice/fax/modem call percentages.
- Call quality information, such as speech level, noise level, echo path loss, echo path delay and call clarity index.
- Fax call-related information, such as fax success/failure rate, transmission speed and failure causes,
- Data packet transmission attributes, such as packet loss, jitter, delay, media payload content and quality.

Intrusive tools 44 are typically connected the network 20 over subscriber lines 38, in conjunction with subscriber equipment 40 at customer sites, The subscriber equipment typically comprises telephone equipment, as shown in the figure. Alternatively or additionally, the subscriber equipment may comprise data communications equipment, such as a computer 45. The intrusive tools may also be connected to carrier lines 28 associated with core network 22 or deployed at other strategic locations around the network. An example of a suitable intrusive tool is the Quali, Net remote testing device, also produced by ECtel. This device is capable of sending, receiving and analyzing various types of telephone signals, including voice, data and fax in a choice of formats, in analog, PCM (pulse-code modulated) or packetized form. It can be used to test both subscriber lines 38 and other interfaces, including four-wire lines, channels within digital trunks (such as E1 and Ti trunks) and digital network (LAN) interfaces.

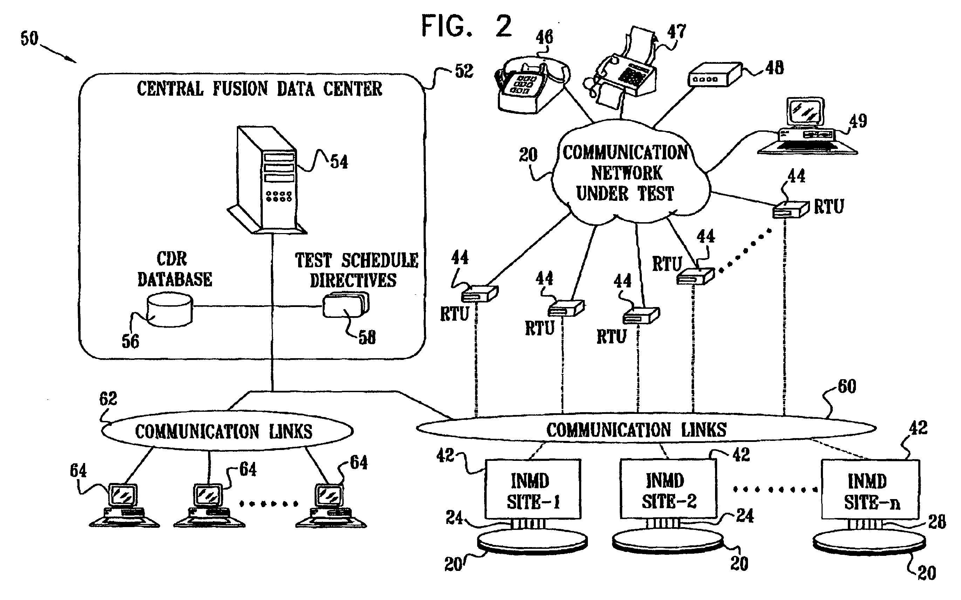

Fig. 2 is a block diagram that schematically illustrates the architecture of a test system 50 that is deployed in network 20, in accordance with a preferred embodiment of the present invention. System 50 comprises non-intrusive monitors 42 and intrusive tools 44, which are shown in Fig. 1. Here, monitors 42 are referred to as In-service Non-intrusive Monitoring Devices (INMDs), while tools 44 are referred to as Remote Test Units (RTUs). Monitors 42 and tools 44 are connected by data communication links 60 to a central fusion data center 52. Links 60 typically belong to a suitable wide-area network (WAN) or local-area network (LAN), operating in accordance with the TCP/IP protocol or with another suitable data communications protocol.

Data center 52 comprises a configuration and data management server (CDMS) 54, which runs a fusion testing application that integrates the operations of non-intrusive monitors 42 and intrusive tools 44. Typically, server 54 comprises a general-purpose computer processor with necessary peripherals and suitable software for carrying out the functions described herein. This software may be downloaded to the server in electronic form, or it may alternatively be supplied to the server on tangible media, such as CD-ROM. Server 54 also accesses a memory or storage device containing a database 56 of CDRs generated by monitors 42 and 44.

Operation of server 54 is controlled in accordance with test schedule directives 58 that are input by users of test system 50, The users interact with server 54 and receive reports of monitoring and test results at terminals 64 via communication links 62, which are preferably part of a suitable WAN or LAM. These user services are provided, for example, by the ECtel ViewPoint system, which is preferably integrated with data center 52 in order to give the users access to features such as exception thresholds, monitoring schedules, trend analysis, network alarms and trouble tickets.

Intrusive tools 44 are typically used in pairs, one at either end of a network segment under test. One of the tools in the pair places calls and sends signals to the other tool, which then analyzes and reports on the calls it has received. In this mode of operation using devices such as the above-mentioned Quali.Net, it is possible to perform a range of tests including:
- Call connectivity.
- Modem test.
- Channel characteristics test (23-tone modem quality test).
- Psycho-acoustic speech quality test.
- Fax quality test.
- LAN-based test, including functions such as File Transfer Protocol (FTP), Ping, packet loss testing, measurements of jitter, delay and response time, etc.

Alternatively, intrusive tools 44 may be used to make calls to generic devices, such as a telephone 46, a fax machine 47, a modem 48 or a computer 49. In this case, tool 44 initiates a test call to the generic device. Only tools 44 are configured to communicate with data center 52. The test functionality is more limited than in tests carried out between a pair of tools 44, as described above, due to the more restricted capability of the remote generic device.

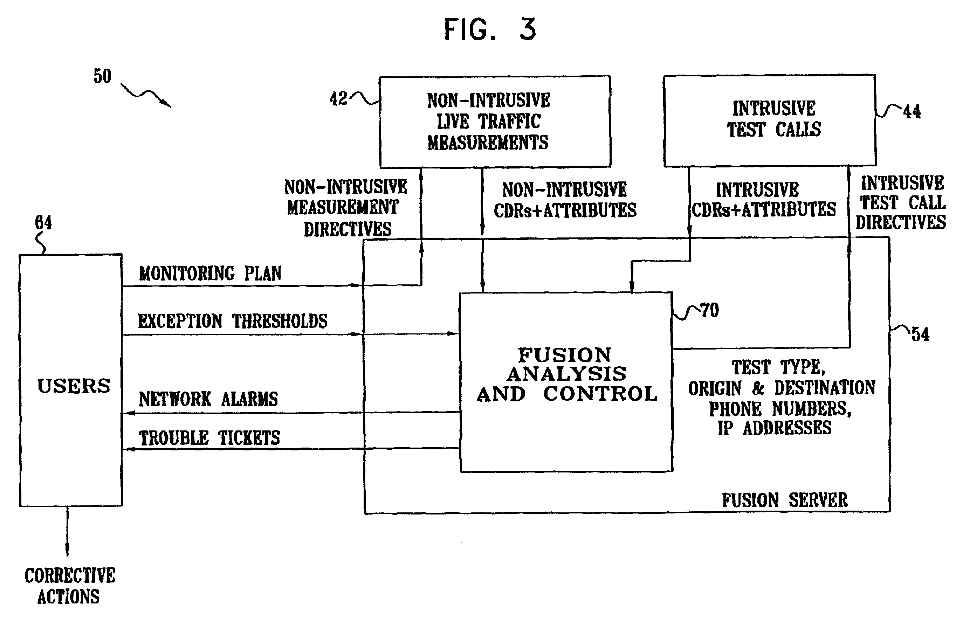

Fig. 3 is a block diagram that schematically illustrates functional interactions among the elements of system 50, in accordance with a preferred embodiment of the present invention. Users of system 50 input a monitoring plan for non-intrusive monitors 42, instructing them as to the live traffic measurements that they are to make. Monitors 42 generate CDRs and data packet attributes based on the traffic that they monitor. The users also set exception thresholds for use in a fusion analysis and control application 70 running on server 54. The thresholds indicate a level of service below which server 54 is to determine that a fault has probably occurred in network 20. For example, the threshold may indicate a minimum percentage of fax calls that a given monitor 42 should determine to have been successfully completed, or to have been completed at the maximum fax data rate. If the actual, observed percentage is below the minimum threshold, application 70 returns a network alarm. As another example, the threshold may indicate a maximum level of packet loss that may be detected in data transmission. The results of this non-intrusive monitoring typically provide a macroscopic indication that a fault has occurred, but cannot pinpoint the exact type or location of the fault.

Therefore, in response to a non-intrusive monitoring alarm, application 70 preferably invokes intrusive tools 44 to place specific test calls through network 20. The test call directives issued by server 54 to tools 44 preferably include the type of tests to carry out, such as the type (voice, data or fax) and number of calls or sessions to be placed, and the origin and destination telephone numbers or IP addresses between which to place the calls or sessions. Tools 44 return their own CDRs or packet attributes, which enable application 70 to verify and localize the fault, in a way that is not possible with non-intrusive measurements alone. Application 70 processes these intrusive CDRs in order to generate a "trouble ticket," presenting the complete fault diagnosis to the user, who then takes the appropriate corrective action.

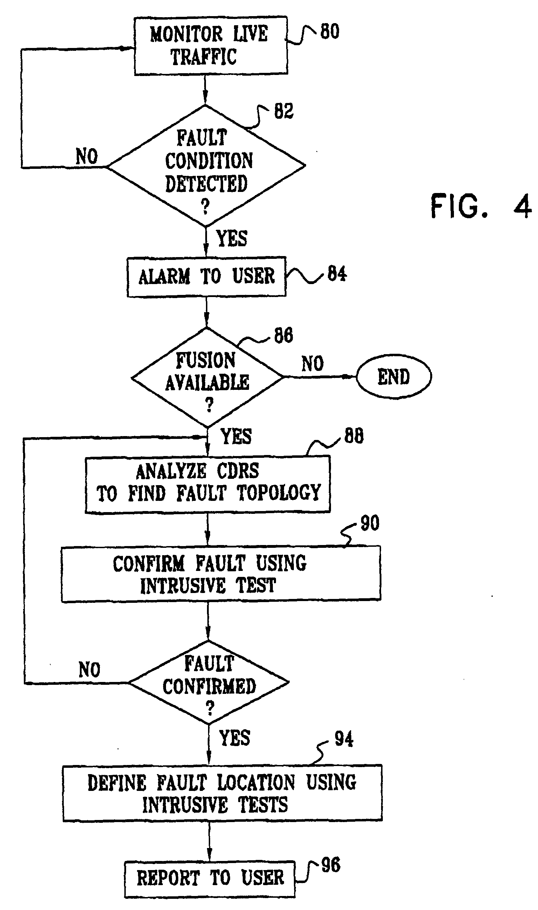

Fig. 4 is a flow chart that schematically illustrates a method for testing and fault diagnosis in network 20, implemented by system 50, in accordance with a preferred embodiment of the present invention. At a monitoring step 80, non-invasive monitors 42 monitor live traffic on network trunks and carriers. At a fault detection step 82, an exception condition is detected. For example, a monitor on a trunk line between England and North America may determine that the number of successfully-completed fax calls has fallen below a preset threshold. Server 54 immediately returns an alarm to a user at the appropriate terminal 64, at an alarm step 84. At a fusion decision step 86, the server ascertains whether system 50 has facilities available to perform an intrusive test, typically in the form of tools 44 deployed at appropriate network locations. (This step, along with the other actions in the method of Fig. 4, is typically carried out automatically, without requiring human intervention.) The server also checks whether fusion testing is a selected option for this user, at an availability checking step 86. If not, the test process at this point terminates and returns to the user for further action.

Assuming that fusion testing is available, application 70 on server 54 analyzes the non-invasive CDRs and data transmission attributes received from monitors 42 to find the network topology that must be tested in order to localize the fault. Continuing with the example mentioned above, the fax problem may have arisen on the international trunk between England and North America, or it may be in a switch, trunk or carrier line within England. Based on this topological analysis, the application identifies a pair of intrusive tools 44, or a combination of a test tool 44 and a generic device 46, 47 or 48, that span the part of the topology suspected of being at fault. This pair could include one such tool in New York and another in Manchester, England. Test calls are placed between these two locations at a fault confirmation step 90, in order to verify that the fault indicated by the earlier non-intrusive results does indeed occur and to derive further information as to the nature of the fault. If the fault is not confirmed as expected, the analysis and verification of steps 88 and 90 are preferably repeated and refined.

Once the existence of the fault has been verified, server 54 breaks the relevant part of the topology of the network into segments, which are tested individually using appropriately-located intrusive tools 44, at a fault location step 94. At this step, assuming the tools are available, fax calls could be sent between tools 44 at different locations in order to test the international trunk and each of the local trunks and switches in isolation, to the extent possible. In this manner, with an intermediate tool 44 in London, it might be possible to determine that the international trunk is in order, but a faulty switch in Manchester is causing sub-threshold network performance over areas of England. Upon receiving these findings from tools 44, server 54 generates a trouble ticket for delivery to the user's terminal 64, at a reporting step 96. The user then initiates the required corrective action, such as a service call to the Manchester switching facility.

While preferred embodiments are described herein with reference mainly to a terrestrial telephone network, it will be appreciated that the principles of the present invention are similarly applicable, *mutatis mutandis*, to communication networks of other types, such as cellular and satellite networks, and to packet-switched (IP) as well as circuit-switched networks. It will thus be understood that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for testing a communication network (20), comprising:
monitoring communication activity in the network non-intrusively to generate monitoring results;
analyzing the results to detect a fault condition; and
initiating an intrusive test of the network responsive to the detected fault condition.

2. A method according to claim 1, wherein monitoring the communication activity comprises receiving call detail records of calls placed through the network.

3. A method according to claim 1 or 2, wherein monitoring the communication activity comprises receiving data transmission attributes of data traffic carried through the network.

4. A method according to any of the preceding claims, wherein analyzing the results comprises deriving a service quality indicator from the results, and comparing the indicator to a predefined threshold in order to detect the fault condition.

5. A method according to any of the preceding claims, wherein analyzing the results comprises identifying a part of the network in which the fault has occurred, and wherein initiating the intrusive test comprises carrying out the intrusive test in the identified part of the network.

6. A method according to claim 5, wherein initiating the intrusive test comprises passing a test stimulus through the part of the network to verify existence of the fault condition in the part.

7. A method according to claim 5 or 6, wherein initiating the intrusive test comprises passing a test stimulus through a segment of the part of the network in order to localize the fault condition.

8. A method according to any of the preceding claims, wherein initiating the intrusive test comprises initiating the test automatically by a computer, in response to preprogrammed test instructions, upon detection of the fault condition.

9. A method according to any of the preceding claims, and comprising reporting the fault condition to a user responsive to the monitoring results and the intrusive test.

10. A computer software product for testing a communication network (20), the product comprising a computer-readable medium in which program instructions are stored, which instructions, when read by a computer (54), cause the computer to receive monitoring results from a non-intrusive monitor of communication activity in the network, to analyze the results to detect a fault condition, and to initiate an intrusive test of the network by an intrusive testing tool responsive to the detected fault condition.

11. Apparatus (52) for testing a communication network (20), comprising a fusion processor (54) adapted to receive monitoring results from a non-intrusive monitor (42) of communication activity in the network, to analyze the results to detect a fault condition, and to initiate an intrusive test of the network by an intrusive testing tool set (44) responsive to the detected fault condition.

12. Apparatus (50) for testing a communication network (20), comprising:
a non-intrusive monitor (42), configured to monitor communication activity in the network non-intrusively, thus generating monitoring results;
an intrusive testing tool set (44), configured to inject a test stimulus into the network and to detect the test stimulus after passage of the test stimulus through the network; and
a fusion processor (54), coupled to receive and analyze the monitoring results to detect a fault condition, and to initiate an intrusive test of the network by the tool set responsive to the detected fault condition.

13. Apparatus according to claim 11 or 12, wherein the monitoring results comprise call detail records of calls placed through the network.

14. Apparatus according to any of claims 11-13, wherein the monitoring results comprise data transmission attributes of data traffic carried through the network.

15. Apparatus according to any of claims 11-14, wherein the processor is adapted to derive a service quality indicator from the results, and to compare the indicator to a predefined threshold in order to detect the fault condition.

16. Apparatus according to any of claims 11-15, wherein the processor is adapted to identify a part of the network in which the fault has occurred, and to control the tool set so as to carry out the intrusive test in the identified part of the network.

17. Apparatus according to claim 16, wherein the processor is adapted to control the tool set to pass the test stimulus through the identified part of the network to verify existence of the fault condition in the part.

18. Apparatus according to claim 16 or 17, wherein the processor is adapted to control the tool set to pass the test stimulus through a segment of the identified part of the network in order to localize the fault condition.

19. Apparatus according to any of claims 11-18, wherein the processor is adapted to initiate the test automatically upon detection of the fault condition in response to preprogrammed test instructions.

20. Apparatus according to any of claims 11-19, and comprising a user terminal, wherein the processor is adapted to report the fault condition to the user terminal responsive to the monitoring results and the intrusive test.

21. Apparatus according to any of claims 11-20, wherein the communication activity comprises at least one of signaling activity, voice-band communications, multimedia communications, and data packet transmission activity.
